# EUROPÄISCHE PATENTSCHRIFT

(11) **EP 1 140 323 B1**
(45) Veröffentlichungstag und Bekanntmachung des Hinweises auf die Patenterteilung: **12.07.2006**
(21) Anmeldenummer: 99960889.6
(22) Anmeldetag: 11.11.1999
(51) Int. Cl.: B01D 53/22

(54) **VERFAHREN ZUR TRENNUNG VON KOHLENWASSERSTOFFEN AUS EINEM GASSTROM MITTELS EINER MEMBRANTRENNEINRICHTUNG**
METHOD FOR SEPARATING HYDROCARBONS FROM A GAS STREAM USING A MEMBRANE SEPARATION DEVICE
PROCEDE DE SEPARATION D'HYDROCARBURES DANS UN COURANT GAZEUX AU MOYEN D'UN DISPOSITIF DE SEPARATION A MEMBRANE

(30) Priorität: 04.12.1998 DE 19856068
(43) Veröffentlichungstag der Anmeldung: 10.10.2001
(73) Patentinhaber: GKSS-Forschungszentrum Geesthacht GmbH, 21502 Geesthacht (DE)
(72) Erfinder: WIND, Jan, D-21481 Lauenburg (DE); OHLROGGE, Klaus, D-21502 Geesthacht (DE); KEIL, Bernd, D-21502 Geesthacht (DE); ALPERS, Anja, D-40476 Düsseldorf (DE)
(74) Vertreter: Seemann, Ralph
(86) Internationale Anmeldenummer: PCT/DE1999/003586
(87) Internationale Veröffentlichungsnummer: WO 2000/033941

(56) Entgegenhaltungen:
- US-A- 5 762 685

## Beschreibung

Die Erfindung betrifft ein Verfahren zur Trennung von Kohlenwasserstoffen aus einem Gasstrom mittels einer Membrantrenneinrichtung, wobei der zu trennende Gasstrom auf einen Eingang der Membrantrenneinrichtung gegeben wird, in der er in einen kohlenwasserstoffangereicherten und einen kohlenwasserstoffabgereicherten, die Membraneinrichtung verlassenden Teilstrom getrennt wird.

Ein Membrantrennverfahren dieser Art ist bekannt (EP-B-0 348 501). Bei diesem bekannten Verfahren wird die Abtrennung höherer Kohlenwasserstoffe aus einem Gasstrom mittels einer Membrantrenneinrichtung bewirkt. Dabei wird der zu trennende Gasstrom in einer ersten Stufe entspannt und das dabei anfallende Kondensat wird in einfach ausgeführten Vorrichtungen abgeschieden.

Ein weiterer Verfahren dieser Art is bekannt aus US-A-5 762 685.

Allgemein bekannt ist, daß die Entfernung von höheren Kohlenwasserstoffen wie beispielsweise Propan, Butan usw. aus Gasströmen in vielen technischen Bereichen gang und gäbe ist. Ein möglicherweise mit Abstand größter Anwendungsfall für die Trennung von Kohlenwasserstoffen aus einem Gasstrom ist beispielsweise Erdgas, weil hier sehr große Volumenströme zur Aufarbeitung anfallen. Auch im Bereich der Erdölraffination müssen höhere Kohlenwasserstoffe, die vorher im Erdöl gelöst waren, aus Gasströmen wieder abgetrennt werden, damit diese Gasströme rezirkuliert werden können. Höhere Kohlenwasserstoffe selbst stellen einen Wertstoff dar, dessen Gewinnung von hohem wirtschaftlichen Vorteil ist.

Die Kohlenwasserstoffe selbst haben bisweilen die negative Eigenschaft, daß sie beispielsweise beim Transport von Erdgas in Rohrleitungen auskondensieren, wobei in der Folge beispielsweise Rohre aus Kunststoff und Regeleinrichtungen und dergleichen angegriffen werden können. Im Bereich der Raffineriegastechnik würden sich die höheren Kohlenwasserstoffe im Kreislaufstrom immer weiter anreichen und so die wichtige Wasserstoffkonzentration in einem nicht akzeptablen Maße erniedrigen. Aus diesem Grunde muß der Gehalt an höheren Kohlenwasserstoffen in diesen Gasen durch Einschaltung eines geeigneten Trennverfahrens vermindert werden. Der einzustellende Taupunkt für die höheren Kohlenwasserstoffe und damit auch der Trennaufwand hängen von den spezifischen Anforderungen der beabsichtigten Verwendung der jeweiligen Gase ab.

Im Stand der Technik werden zur Taupunkteinstellung im wesentlichen Kühl- und Adsorptionsverfahren eingesetzt. Bei den Kälteverfahren wird der zu trennende Gasstrom abgekühlt, bis die höheren Kohlenwasserstoffe durch Kondensation abgeschieden werden oder der Bildung von Hydraten. Die Temperaturabsenkung kann hierbei durch ein Drosselung des Gasstromes, beispielsweise bei Erdgas direkt an der Förderstätte von dem recht hohen Druck des Erdgases an der Förderstätte, auf niedrigere Drücke erreicht werden. Das Gas kühlt sich hierbei aufgrund des Joule-Thomson-Effekts ab. Diese einfache Verfahren kann in der Nähe einer Erdgasquelle angewandt werden, wo noch hohe Förderdrücke zur Verfügung stehen.

Wenn der Druck des Gases bzw. Gasstromes jedoch nur noch wenig über dem Druck des Leitungssystems liegt, müssen externe Kühlvorrichtungen eingesetzt werden. So kann beispielsweise eine Abtrennung höherer Kohlenwasserstoffe aus einem Gasstrom durch Adsorption bewirkt werden, bei dem das mit höheren Kohlenwasserstoffen beladene Gas durch einen mit geeigneten Adsorbentien gefüllten Behälter strömt. Die starken Wechselwirkungen der in dem Gas enthaltenden Kohlenwasserstoffe mit den festen Adsorbentien großer innerer Oberfläche ermöglichen eine selektive Abtrennung der höheren Kohlenwasserstoffe.

Ein wesentlicher Nachteil einer Abtrennung von höheren Kohlenwasserstoffen aus einem Gasstrom mittels eines Adsorptionsverfahrens ist darin begründet, daß das Adsorptionsverfahren prinzipiell nur diskontinuierlich betrieben werden, weil die Adsorbentien nur eine begrenzte Aufnahmekapazität für das Adsorbat, hier höhere Kohlenwasserstoffe, haben, und somit in kurzen Zeitabschnitten regeneriert werden müssen. Es sind somit wenigstens 2 Adsorbereinrichtungen nötig, die wechselseitig betrieben und jeweils regeneriert werden müssen. Die Desorption der Kohlenwasserstoffe erfolgt vorwiegend mit einem Teil des gereinigten Gasstromes bei erhöhten Temperaturen.

Das eingangs beschriebene Kühlverfahren stellt an sich den direktesten Weg, einen definierten Taupunkt eines Gas-Dampf-Gemisches einzustellen, dar. Die Anwendung des Kühlverfahrens zur Abtrennung höherer Kohlenwasserstoffe aus Gasströmen weist jedoch aus energetischer Sicht große Nachteile auf. Der Anteil der kondensierbaren Komponenten beispielsweise eines typischen Erdgases beträgt weniger als 5 Vol.-%. Das bedeutet jedoch, daß 95 Vol.-% des Gasstromes auf die erforderliche tiefe Temperatur abgekühlt werden müssen, ohne daß für diesen Hauptanteil des Gasstromes ein Nutzen daraus entstünde. Bei der tatsächlichen Anwendung dieses Verfahrens wird sogar ein Teil des Erdgases wieder verbrannt, um den Gasstrom wieder auf eine Temperatur zu erwärmen, die für die weiteren Prozeßschritte erforderlich ist. Außerdem steht nicht immer ein so hoher Vordruck zur Verfügung, um die für die Kondensation der höheren Kohlenwasserstoffe erforderlichen tiefen Temperaturen zu erzeugen. In diesen Fällen muß dann der Gasstrom zusätzlich noch durch Kältemaschinen gekühlt werden. Dieses ist mit erhöhten Investitions- und Betriebskosten verbunden und bedeutet eine weitere Verschlechterung des energetischen Wirkungsgrades für den Gasprozeß.

Zudem wird in der Regel die Anwendung eines Kühlverfahrens nicht ausreichen, um einen gewünschten Taupunkt einstellen können. Es muß daher immer auch eine Adsorptionseinrichtung nachgeschaltet werden. Hiermit können zwar niedrigere Taupunkte eingestellt werden, die Adsorptionseinrichtungen sind jedoch einem Kälteverfahren aus betriebstechnischen Gründen unterlegen. Der Hauptnachteil des Adsorptionsverfahrens liegt jedoch in dem grundsätzlich diskontinuierlichen Betrieb begründet, siehe oben. Sowohl bei warm als auch bei mit niedrigen Druck regenerierten Adsorbern ist ein Spülgasstrom zum Auswaschen der vorher adsorptiv gebundenen Kohlenwasserstoffe erforderlich. Da der Spülgasstrom arm an höheren Kohlenwasserstoffen sein muß, wird hierzu ein gewisser Anteil des gereinigten Gasstromes verwendet. Dieser zuvor aufwendig aufbereitete Teilstrom steht dem Gasproduzenten demnach nicht mehr zur Verfügung und geht verloren. Der Spülgasstrom kann dann höchstens noch unter ungünstigen Bedingungen als Heizgas für andere Anlagenteile eingesetzt werden. Je nach Anwendungsfall und Regenerationsmodus kann dieser Verluststrom eine beträchtliche Größe annehmen. Während die Adsorption bei möglichst niedrigen Temperaturen abläuft, ist für die Desorption eine Temperaturerhöhung notwendig. Die Aufheizung des Spülgasstromes ist nachteiligerweise wiederum mit einem weiteren Energieverbrauch verbunden. Schließlich wird das Adsorptionsmittel durch den zyklisch vorzunehmenden Temperaturwechsel stark belastet. Die Auswirkungen sind mit der Zeit absinkende Gleichgewichtsbeladungen bzw. Aufnahmekapazitäten der Adsorptionsmittel. In gewisser Weise ist die Adsorption sogar ein selbsthemmendes Verfahren, da mit der Adsorption der höheren Kohlenwasserstoffe das Freiwerden von Adsorptionswärme verbunden ist, die wiederum zu einem Temperaturanstieg im Adsorberbett führt und somit das Adsorptionsgleichgewicht in Richtung einer deutlich schlechteren Aufnahme der Kohlenwasserstoffe verschiebt. Im Falle der Raffineriegastechnik wird der Spiegel an höheren Kohlenwasserstoffen im zirkulierenden Gasstrom dadurch gesenkt, daß einfach ein Teil über ein Regelventil ausgeschleust wird, ähnlich dem sogenannten Purge-Gasstrom in der Ammoniaksynthese. Dieses hat natürlich den Nachteil, daß auch ein Verlust der eigentlich erwünschten Komponenten, vorzugsweise Wasserstoff, entsteht. Dieser Purge-Gasstrom dient im weiteren nur noch als Heizgas für andere Prozesse innerhalb der Raffinerie.

Es ist somit Aufgabe der vorliegenden Erfindung, ein Verfahren der eingangs genannten Art zu schaffen, mit dem eine effektive Trennung von höheren Kohlenwasserstoffen aus einem Gasstrom möglich ist, wobei das Verfahren auf einfache Weise und damit kostengünstig durchgeführt werden kann und aufwendige Verfahrensschritte und Vorrichtungen zur Durchführung der Verfahren, wie sie bisher nötig waren, vermieden werden.

Gelöst wird die Aufgabe gemäß der Erfindung dadurch, daß der Gasstrom, bevor er in die Membraneinrichtung eintritt, durch einen die Membrantrenneinrichtung verlassenden Teilstrom mittels Wärmeaustauschs in seiner Temperatur erniedrigt wird.

Die Abtrennung der höheren Kohlenwasserstoffe erfolgt selbst in der Membrantrenneinrichtung, die eine selektive Membran umfaßt. Die Membran bewirkt eine Auftrennung des Gasstromes (Feed) in einen kohlenwasserstoffangereicherten Teilstrom (Permeat) und eine kohlenwasserstoffabgereicherten Teilstrom (Retentat). Hierbei werden die durch die Membran permeierenden Komponenten von dem hohen Druck des Gasstroms auf nahezu atmosphären Druck entspannt. Da die permeierenden Komponenten in diesem Druck- und Temperaturbereich einen hohen Joule-Thomson-Koeffizienten besitzen, kommt es infolge der Drosselung zu einer starken Temperaturabnahme des kohlenwasserstoffangereicherten Teilstroms (Permeatstroms).

Die Wärmeübertragung von dem verbleibenden Retentatstrom auf das kühlere Permeat kann aufgrund der für den erfindungsgemäßen Zweck sehr dünn gewählten Membran als sehr gut angenommen werden, so daß es daher auch zu einer starken Abkühlung des kohlenwasserstoffabgereicherten Teilstroms (des Retentatstroms) kommt. Demzufolge liegen sowohl die Temperatur des kohlenwasserstoffabgereicherten als auch den kohlenwasserstoffangereicherten Teilstromes weit unter der Temperatur des zugeführten, zu trennenden Gasstromes. Mit der erfindungsgemäßen Temperaturerniedrigung des zu trennenden Gasstromes, bevor er in die Membrantrenneinrichtung eintritt, gelingt es, das durchschnittliche Temperaturniveau in der Membrantrenneinrichtung um bis zu 15° C und mehr zu senken.

Die Sorption der höheren Kohlenwasserstoffe wird aufgrund der exothermen Sorptionswärme durch tiefere Temperaturen begünstigt, während beispielsweise die Sorption von im Gasstrom enthaltenen Permanentgasen mit ihrer endothermen Sorptionswärme benachteiligt ist. Mittels der erfindungsgemäßen Lösung wird somit der Effekt gezielt ausgenutzt, daß durch fallende Temperaturen die Selektivität der höheren Kohlenwasserstoffe zu den von der Membran zurückzuhaltenden Permanentgasen wie Wasserstoff oder das schwer kondensierbare Methan erhöht wird. Es ist deshalb außerordentlich vorteilhaft, mittels der erfindungsgemäß vorgeschlagenen Maßnahmen den in die Membraneinrichtung eintretenden Gasstrom mittels eines die Membrantrenneinrichtung verlassenden Teilstromes abzukühlen, mit der Folge, daß die Membrantrenneinrichtung insgesamt wiederum in ihrem Temperaturniveau erniedrigt wird und damit wiederum eine verbesserte Trennleistung der Membrantrenneinrichtung im erfindungsgemäßen Sinne erreicht wird.

Der Vorteil, der sich daraus ergibt, schlägt sich in einer einfachen, kompakten Verfahrensführung nieder, wobei auch ein gegenüber bisherigen Verfahren dieser Art geringeres Bauvolumen und eine erhebliche Gewichtsreduzierung (Fundamente) zu verzeichnen ist. Das erfindungsgemäße Verfahren hat zudem den Vorteil, daß es anders als beispielsweise die Adsorption eine uneingeschränkt kontinuierliche Verfahrensweise ermöglicht und kein Spülgasstrom erforderlich ist und somit keine Verluste an dem kohlenwasserstoffabgereicherten Teilstrom zu verzeichnen ist. Zudem wird erfindungsgemäß, anders als beispielsweise bei dem in der Raffineriegastechnik gängigen Praxis des "Purgens", wo ein Teil des Kreislaufstromes mit den eigentlichen Wertstoffen abgezweigt wird und der nur noch zur Wärmegewinnung verwendbar ist, vermieden. Ein weiterer Vorteil ist der, daß mittels der erfindungsgemäßen Lösung bei gleichem Grad der Abreicherung eine geringere Druckdifferenz als für die bekannten Kälteverfahren nötig ist, wodurch der verfahrensmäßige Aufwand wiederum erheblich reduziert werden kann, was sich in den geringeren Kosten für den Betrieb des Verfahrens positiv niederschlägt.

Wie vorangehend dargelegt, ist der kohlenwasserstoffabgereicherte Teilstrom (Retentat) und der kohlenwasserstoffangereicherte Teilstrom (Permeat) in bezug auf die Temperatur des von Kohlenwasserstoffen zu trennenden Gasstroms aufgrund des Joule-Thomson-Effektes erheblich in der Temperatur vermindert. Aus diesem Grunde kann es vorteilhaft sein, für den zum Wärmeaustausch mit dem Gasstrom zugeführten Teilstrom den kohlenwasserstoffangereicherten Teilstrom (Permeat) zu verwenden, da gerade die permeierenden Komponenten in diesem Druck- und Temperaturbereich, wie gesagt, einen hohen Joule-Thomson-Koeffizienten besitzen, d.h. es kommt infolge der Drosselung, bedingt durch die Membran, zu einer sehr starken Temperaturabnahme des Permeatstroms, so daß sich der kohlenwasserstoffangereicherte Teilstrom zum Wärmeaustausch mit dem zur Membraneinrichtung zugeführten Gasstrom hervorragend eignet.

Es ist aber bei einer anderen vorteilhaften Ausgestaltung der Vorrichtung ebenfalls möglich, zum Wärmeaustausch mit dem Gasstrom als zugeführten Teilstrom den kohlenwasserstoffabgereicherten Teilstrom (Retentat) zu verwenden, da, wie oben erwähnt, die Wärmeübertragung zwischen dem Retentatstrom und dem gegenüber diesem kälteren Permeatstrom aufgrund der sehr dünnen Membran und gegebenenfalls aufgrund günstiger Strömungsverhältnisse als sehr gut vorausgesetzt werden kann, so daß auch der kohlenwasserstoffabgereicherte Teilstrom (Retentat) sich sehr gut zum Wärmeaustausch mit dem der Membraneinrichtung zugeführten Gasstrom eignet. Versuchsweise durchgeführte Messungen mit einem Raffineriegas haben gezeigt, daß eine Temperaturabnahme zwischen dem in die Membraneinrichtung eintretenden Gasstrom und dem aus der Membraneinrichtung austretenden Retentat von 28° C auf 17,5° C zu verzeichnen gewesen war.

Ganz besonders vorteilhaft ist es, sowohl den kohlenwasserstoffangereicherten als auch den kohlenwasserstoffabgereicherten Teilstrom, d.h. das Permeat und das Retentat, zum Wärmeaustausch mit dem Gasstrom heranzuziehen, so daß das gesamte "Kälteinventar" beider Teilströme zum Wärmeaustausch mit dem Gasstrom gemäß der Erfindung herangezogen werden kann.

Um zu gewährleisten, daß der Joule-Thomson-Effekt optimal genutzt werden kann, ist es schließlich vorteilhaft, den Druck des der Membran zugeführten Gasstromes sehr hoch anzusetzen, beispielsweise im Bereich von 40 bar. Dieser steht beispielsweise an Erdgasquellen unmittelbar zur Verfügung, so daß das erfindungsgemäße Verfahren an sich energiefrei, d.h. ohne Fremdenergie, betrieben werden kann. Ist das für den verfahrens- bzw. erfindungsgemäßen Betrieb nötige Druckinventar des zu trennenden Gasstroms nicht vorhanden, braucht lediglich eine Verdichtungseinrichtung vorgesehen zu werden, um einen bestimmungsgemäßen Primärdruck für den Gasstrom zu erzeugen. Dieses stellt das einzige ggf. zusätzliche Energieerfordernis für den erfindungsgemäßen Betrieb des Verfahrens dar.

Die Erfindung wird nun unter Bezugnahme auf die nachfolgenden schematischen Zeichnungen anhand eines Ausführungsbeispieles eingehend beschrieben. Diese zeigen:
- Fig. 1: in Form eines Blockschaltbildes den schematischen Aufbau einer Vorrichtung zur Ausführung des erfindungsgemäßen Verfahrens und
- Fig. 2: eine beispielhafte Darstellung von Reingaspermeabilitäten in Abhängigkeit von der Temperatur für verschiedene Gase.

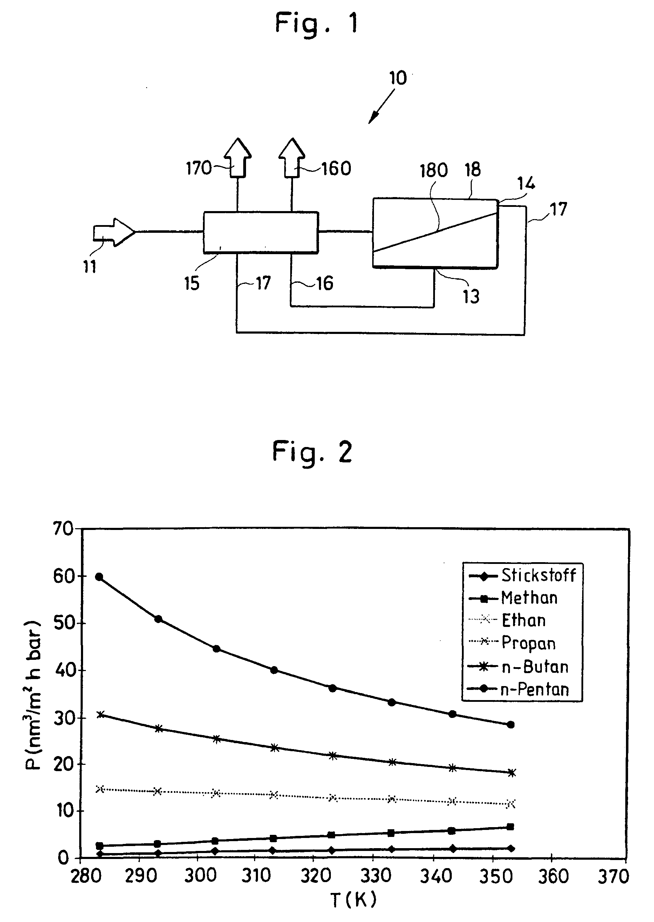

Eine Vorrichtung 10 zur Ausführung des Verfahrens ist in Fig. 1 anhand eines Blockschaltbildes dargestellt.

Die Vorrichtung 10 umfaßt eine Membrantrenneinrichtung 18, die nach an sich bekannten Prinzipien aufgebaut ist. Die Membran 180 ist hier beispielsweise eine Dünnfilmkompositmembran auf Polyoctylmethylsiloxan-Basis, die eine hohe Permeabilität für Kohlenstoffe aufweist. Eine derartige Membran ist beispielsweise in der auf die Anmelderin selbst zurückgehenden US-PS 5 595 658 beschrieben. Darüber hinaus umfaßt die Vorrichtung 10 einen Wärmetauscher 15, der an sich einen allgemein bekannten Aufbau aufweist. Der Wärmetauscher 15 ist hier als Doppeltwärmetauscher 15 ausgebildet, d.h. es können über den Wärmetauscher 15 zwei unabhängig voneinander am Wärmeaustauschvorgang beteiligte Teilströme 16 und 17 teilnehmen, was im einzelnen noch weiter unten beschrieben wird.

Ein Gasstrom (Feed), der von Kohlenwasserstoffen, insbesondere höheren Kohlenwasserstoffen, getrennt wird, wird über den Wärmetauscher 15 auf einen Eingang 12 (Feed-Eingang) der Membrantrenneinrichtung 18 gegeben. Der Gasstrom 11 weist beispielsweise einen Druck im Bereich von 40 bar auf. In der Membrantrenneinrichtung 18 wird auf an sich bekannte Weise der Gasstrom 11 in einen kohlenwasserstoffabgereicherten Teilstrom 17 (Retentat) getrennt, der die Membrantrenneinrichtung 18 über den Retentatausgang 14 verläßt, und in einen kohlenwasserstoffangereicherten Teilstrom (Permeat) 16 getrennt, der die Membrantrenneinrichtung 18 über den Permeatausgang 13 verläßt.

Bei der Trennung des Gasstromes 11 über bzw. mittels der Membran 180 werden die permeierenden Komponenten des Gasstromes 11 von dem hohen Druck, hier in dem Beispiel von 40 bar, auf nahezu atmosphären Druck entspannt. Die Folge ist aufgrund des Joule-Thomson-Effektes, daß infolge der dadurch bewirkten Drosselung des Druckes eine starke Temperaturabnahme des kohlenwasserstoffangereicherten Teilstromes (Permeat) 16 stattfindet. Der kohlenwasserstoffabgereicherte Teilstrom (Permeat) 16 wird nach dem Austritt aus dem Permeatausgang 13 über den Wärmetauscher 15 geleitet und verläßt den Wärmetauscher 15 nach der Wärmeübertragung auf den Gasstrom 11 als kohlenwasserstoffangereichter Teilstrom 160 die Vorrichtung 10.

Auch der kohlenwasserstoffabgereicherte Teilstrom (Retentat) 17, der die Membrantrenneinrichtung 18 über den Retentatausgang 14 verläßt, kann über den Wärmetauscher 15 geleitet werden. Aufgrund der Wärmeübertragung des Retentats bzw. des kohlenwasserstoffabgereicherten Teilstroms 17 über der Membran 180 auf das Permeat bzw. den kohlenwasserstoffangereicherten Teilstrom 16 und den in der Membrantrenneinrichtung 18 günstigen Strömungsverhältnissen kommt es auch zu einer starken Abkühlung des kohlenwasserstoffabgereicherten Teilstroms (Retentat) 17, so daß die Temperatur des kohlenwasserstoffabgereicherten Teilstroms (Retentat) 17 weit unter der Temperatur des der Vorrichtung 10 zugeführten Gasstromes 11 liegt. Somit kann auch der kohlenwasserstoffabgereicherte Teilstrom (Retentat) 17 zur Abkühlung des Gasstromes 11 in den Wärmetauscher 15 beitragen.

Die Sorption der höheren Kohlenwasserstoffe wird aufgrund der exothermen Sorptionswärme durch tiefe Temperaturen begünstigt, während die Sorption von Permanentgasen, die auch in einem zu trennenden Gasstrom enthalten sein können, mit ihrer endothermen Sorptionswärme benachteiligt ist. Fig. 2 zeigt diese Abhängigkeit deutlich. Aufgetragen ist hier die Permeabilität einer Membran in nm³m⁻²h⁻¹bar⁻¹ der reinen Gase in Abhängigkeit von der Temperatur in °K. Während die Permeabilitäten der Permanentgase wie Stickstoff oder das schwer kondensierbare Methan mit der Temperatur langsam steigen, fallen sie bei den höheren Kohlenwasserstoffen exponentiell mit steigender Temperatur. Dieser Abfall ist um so ausgeprägter, je länger das Kohlenwasserstoffmolekül ist. Durch fallende Temperaturen wird also die Selektivität der höheren Kohlenwasserstoffe zu den von der Membran 180 zurückzuhaltenden Permanentgasen wie Wasserstoff oder das schwer kondensierbare Methan deutlich erhöht. Es ist deshalb vorteilhaft, wie durch die erfindungsgemäße Lösung realisiert, den in die Membrantrenneinrichtung 18 eintretenden Gasstrom 11 zu kühlen, und zwar erfindungsgemäß mit dem kohlenwasserstoffangereicherten Teilstrom (Permeat) 16 und dem kohlenwasserstoffabgereicherten Teilstrom (Retentat) 17, und zwar durch Überführung dieser beiden Teilströme 16, 17 über den in den Gasstrom 11 eingeschalteten Wärmetauscher 15. Dieses führt erfindungsgemäß zu einem niedrigeren Temperaturniveau in der gesamten Membrantrenneinrichtung 18 und damit zu einer verbesserten Trennleistung.

In der nachfolgenden Tabelle sind die Ergebnisse einer Simulation im Zusammenhang mit der Erfindung dargestellt. Zur Simulation einer Membrantrenneinrichtung 18 wurde eine von der Anmelderin speziell entwickelte Routine verwendet. Hierin wurde die Membrantrenneinrichtung 18 in 100 Kreuzstromzellen unterteilt und für jede Zelle die Massen- und Enthalpiebilanz gelöst. Für ein Gas, dessen Zusammensetzung dem eines typischen Raffineriegases ähnlich ist, wurden die Temperatur und die Zusammensetzungen der Teilströme 16, 17 sowie des der Membrantrenneinrichtung 18 zugeführten Gasstromes 11 mit und ohne vorgeschalteten Wärmetauscher 15 berechnet.

Für die Permeabilitäten der einzelnen Komponenten wurden die experimentell bestimmten Permeabilitäten und deren Temperaturabhängigkeit eingesetzt. Als Eintrittstemperaturen, Drücke und Konzentrationen wurden die Werte aus Feldversuchen verwendet. Die Ergebnisse der Simulation gemäß der Tabelle zeigen, daß mit einem vorgeschalteten Wärmetauscher 15 das durchschnittliche Temperaturniveau in der Membrantrenneinrichtung 18 um 15° C gesenkt werden konnte, wobei die Temperaturangaben von Permeat 16 und Retentat 17 sich immer auf die Ströme beziehen, die die Membrantrenneinrichtung 18 verlassen haben. Als eine Folge sinkt der Verlust an Methan - in diesem Falle die zurückzuhaltende Wertstoffkomponente - um Rund 15 % bei gleichbleibender Abreicherung der höheren Kohlenwasserstoffe.

| Ohne Wärmetauscher | | | |
|---|---|---|---|
| Strom | Feed | Retentat | Permeat |
| Temp. °C | 40,0000 | 31,1983 | 35,7043 |
| Druck bar | 64,900 | 64,900 | 1,915 |
| Total kmol/h | 1,9389 | 1,4415 | 0,4974 |
| Total kg/h | 39,2977 | 29,4142 | 9,8835 |
| Total m3/h | 43,46 | 32,31 | 11,15 |

| Einzelkomponentenströme in kmol/h | | | |
|---|---|---|---|
| Methan | 1,3228 | 0,9403 | 0,3826 |
| Ethan | 0,0408 | 0,0196 | 0,0211 |
| Propan | 0,0139 | 0,0049 | 0,009 |
| I-Butan | 0,0017 | 0,0006 | 0,0011 |
| N-Butan | 0,0022 | 0,0002 | 0,002 |
| I-Pentan | 0,0005 | 0,0001 | 0,0004 |
| N-Pentan | 0,0018 | 0,0004 | 0,0014 |
| N-Heptan | 0,0004 | 0,0001 | 0,0003 |
| Toluol | 0,0003 | 0,0001 | 0,0003 |
| N-Octan | 0,0001 | 0,0000 | 0,0001 |
| Nitrogen | 0,54 | 0,4684 | 0,0715 |
| C02 | 0,0144 | 0,0067 | 0,0077 |

| Mit Wärmetauscher | | | |
|---|---|---|---|
| Strom | Feed | Retentat | Permeat |
| Temp. °C | 40,0000 | 15,6515 | 20,0388 |
| Druck bar | 64,900 | 64,900 | 1,915 |
| Total kmol/h | 1,9389 | 1,4995 | 0,4394 |
| Total kg/h | 39,2977 | 30,4342 | 8,8635 |
| Total m3/h | 43,46 | 33,61 | 9,85 |

| Einzelkomponentenströme in kmol/h | | | |
|---|---|---|---|
| Methan | 1,3228 | 0,9939 | 0,3289 |
| Ethan | 0,0408 | 0,0213 | 0,0195 |
| Propan | 0,0139 | 0,0053 | 0,0085 |
| I-Butan | 0,0017 | 0,0007 | 0,001 |
| N-Butan | 0,0022 | 0,0003 | 0,0019 |
| I-Pentan | 0,0005 | 0,0002 | 0,0003 |
| N-Pentan | 0,0018 | 0,0005 | 0,0012 |
| N-Heptan | 0,0004 | 0,0001 | 0,0002 |
| Toluol | 0,0003 | 0,0001 | 0,0003 |
| N-Octan | 0,0001 | 0,0001 | 0,0001 |
| Nitrogen | 0,54 | 0,4698 | 0,0701 |
| C02 | 0,0144 | 0,0071 | 0,0073 |

Das erfindungsgemäße Verfahren kann auch in den Fällen, wo der Systemdruck nur wenig größer als der Druck in den Transportleistungen ist, angewendet werden, wohingegen bei den bekannten Kälteverfahren externe Kühlvorrichtungen notwendig sind. Es werden gemäß der Erfindung keine problematischen Hilfsstoffe, wie die in Kältemaschinen erforderlichen Kältemittel (Ozonkiller), benötigt. Das erfindungsgemäße Verfahren kommt im wesentlichen ohne Fremdenergie und bewegte Maschinen- und Apparateteile aus. Es hat keine physikalischen Grenzen bezüglich des einzustellenden Kohlenwasserstofftaupunktes, d.h. es können beliebige Temperaturen ober- und unterhalb von 0° C realisiert werden. Auf der Hochdruckseite (Feedseite) der Membran 180 kann prinzipiell kein Kondensat anfallen. Die.hohen Lärmemissionen, die sowohl bei der Adsorption (Entspannung des zu desorbierenden Behälters) als auch bei den Kälteverfahren (Kompressor der Kältemaschine) auftreten, entstehen bei dem erfindungsgemäßen Verfahren nicht. Wie angestrebt, kann das erfindungsgemäße Verfahren weitgehend störunanfällig betrieben werden mit der Folge, daß die Wartungskosten entsprechend gering sind. Durch die erfindungsgemäß auf elegante Weise mögliche Absenkung der Temperatur in der Membraneinrichtung 18 kann das Trennergebnis der Membraneinrichtung 18 deutlich verbessert werden, was grundsätzlich für beliebiges Membranmaterial gilt. Durch die erhöhte Selektivität wird zudem der Verlust am Wertstoff Methan gegenüber den herkömmlichen Membranverfahren reduziert.

### Bezugszeichenliste

- 10: Vorrichtung
- 11: Gasstrom (Feed)
- 110: Gasstromnachwärmetauscher
- 12: Eingang (des Gasstromes)
- 13: Permeatausgang
- 14: Retentatausgang
- 15: Wärmeaustauscher
- 16: kohlenwasserstoffangereicherter Teilstrom (Permeat)
- 160: kohlenwasserstoffangereicherter Teilstrom nach dem Wärmetauscher
- 17: kohlenwasserstoffabgereicherter Teilstrom (Retentat)
- 170: kohlenwasserstoffangereicherter Teilstrom nach dem Wärmetauscher
- 18: Membrantrenneinrichtung
- 180: Membran

## Patentansprüche

1. Verfahren zur Trennung von Kohlenwasserstoffen aus einem Gasstrom mittels einer Membrantrenneinrichtung, in der der zu trennende Gasstrom auf einen Eingang der Membrantrenneinrichtung gegeben wird, in der er in einen kohlenwasserstoffangereicherten und einen kohlenwasserstoffabgereicherten, die Membrantrenneinrichtung verlassenden Teilstrom getrennt wird, wobei der Gasstrom, bevor er in die Membrantrenneinrichtung eintritt, durch einen die Membrantrenneinrichtung verlassenden Teilstrom mittels Wärmeaustauschs in einem Wärmetauscher in seiner Temperatur derart erniedrigt wird, dass im Wärmetauscher und auf der Eingangsseite der Membrantrenneinrichtung kein Kondensat anfällt und die Selektivität der Membran der Membrantrenneinrichtung in Bezug auf höhere Kohlenwasserstoffe zu den von der Membrantrenneinrichtung zurückgehaltenen Permanentgasen erhöht wird.

2. Verfahren nach Anspruch 1, **dadurch gekennzeichnet, daß** der zum Wärmeaustausch mit dem Gasstrom zugeführte Teilstrom der kohlenwasserstoffangereicherte Teilstrom (Permeat) ist.

3. Verfahren nach Anspruch 1, **dadurch gekennzeichnet, daß** der zum Wärmeaustausch mit dem Gasstrom zugeführte Teilstrom der kohlenwasserstoffabgereicherte Teilstrom (Retentat) ist.

4. Verfahren nach Anspruch 1, **dadurch gekennzeichnet, daß** sowohl der kohlenwasserstoffangereicherte als auch der kohlenwasserstoffabgereicherte Teilstrom (Permeat und Retentat) zum Wärmeaustausch mit dem Gasstrom herangezogen werden.

5. Verfahren nach einem oder mehreren der Ansprüche 1 bis 4, **dadurch gekennzeichnet, daß** der Druck des der Membraneinrichtung zugeführten Gasstromes im Bereich von 40 bar liegt.

## Claims

1. Method of separating hydrocarbons from a gas flow by means of a membrane separation unit, in which the gas flow to be separated is delivered to an inlet of the membrane separation unit in which it is separated into a part-flow enriched with hydrocarbons and a part-flow with a reduced hydrocarbon content leaving the membrane separation unit, and before it enters the membrane separation unit, the gas flow is cooled to a lower temperature in a heat exchange process in a heat exchanger by means of a part-flow leaving the membrane separation unit so that no condensate occurs in the heat exchanger and at the inlet end of the membrane separation unit, and the selectivity of the membrane of the membrane separation unit to the permanent gases retained by the membrane separation unit is increased in terms of higher hydrocarbons.

2. Method as claimed in claim 1, **characterised in that** the part-flow used for the heat exchange with the gas flow is the part-flow enriched with hydrocarbons (permeate).

3. Method as claimed in claim 1, **characterised in that** the part-flow used for the heat exchange with the gas flow is the part-flow with a reduced hydrocarbon content (retentate).

4. Method as claimed in claim 1, **characterised in that** both the part-flow enriched with hydrocarbons and the part-flow with a reduced hydrocarbon content (permeate and retentate) are used for the heat exchange with the gas flow.

5. Method as claimed in one or more of claims 1 to 4, **characterised in that** the pressure of the gas flow delivered to the membrane unit is in the region of 40 bar.

## Revendications

1. Procédé de séparation d'hydrocarbures dans un courant gazeux au moyen d'un dispositif à membrane, dans lequel on introduit le courant gazeux à séparer dans une entrée du dispositif à membrane, dans lequel il est séparé en un courant gazeux partiel enrichi en hydrocarbures et un courant gazeux partiel appauvri en hydrocarbures quittant le dispositif à membrane, dans lequel le courant gazeux, avant qu'il entre dans le dispositif à membrane, subit un abaissement de sa température par un courant partiel quittant le dispositif à membrane au moyen d'un échange de chaleur dans un échangeur thermique, de manière à ce qu'aucun condensat ne se produise dans l'échangeur thermique et du côté de l'entrée du dispositif à membrane et que la sélectivité de la membrane du dispositif à membrane par rapport aux hydrocarbures supérieurs soit augmentée pour les gaz permanents retenus par le dispositif à membrane.

2. Procédé selon la revendication 1, **caractérisé en ce que** le courant partiel introduit dans l'échangeur de chaleur avec le courant gazeux est le courant partiel enrichi en hydrocarbures (perméat).

3. Procédé selon la revendication 1, **caractérisé en ce que** le courant partiel introduit dans l'échangeur de chaleur avec le courant gazeux est le courant partiel appauvri en hydrocarbures (rétentat).

4. Procédé selon la revendication 1, **caractérisé en ce que** non seulement le courant partiel enrichi en hydrocarbures mais aussi le courant partiel appauvri en hydrocarbures (perméat et rétentat) sont utilisés pour l'échangeur de chaleur avec le courant gazeux.

5. Procédé selon une ou plusieurs des revendications 1 à 4, **caractérisé en ce que** la pression du courant gazeux introduit dans le dispositif à membrane se situe aux environs de 40 bar.
